# EUROPEAN PATENT APPLICATION

(11) **EP 1 006 312 A1**
(43) Date of publication of application: **07.06.2000**
(21) Application number: 99203929.7
(22) Date of filing: 24.11.1999
(51) Int. Cl.: F21V 8/00, F21S 8/00

(54) **Lighting system for delicate objects, in particular objects of art, intended to be exhibited to the general public**

(30) Priority: 25.11.1998 IT MI980765 U
(71) Applicant: 3M ITALIA S.P.A., I-81020 San Marco Evangelista (Caserta) (IT)
(72) Inventor: Casalone,Roberto, 14034 Castello D'Annone (IT); Dapra',Claudio, 10132 Torino (IT)
(74) Representative: Checcacci, Giorgio

(57) **Abstract**

The lighting system (10) is suitable for delicate objects, in particular objects of art, intended to be exhibited to the general public and embodies an optical lightguide tubular lamp structure (14) and a light source combined with the lamp structure (14). Moreover, the lighting system is characterised in that the lamp structure (14) embodies two rigid half-shells (31.32), elongated in a longitudinal direction and arched in a transversal direction, mutually combined in a longitudinal direction, so that each half-shell (31,32) presents an internal surface facing the inside of the lamp structure (14) and an external surface facing the outside; at least one of the half-shells (31,32) is of transparent material, at least one of the half-shells (31,32) has a convex external surface, at least one of the half-shells (31,32) has an internal surface lined with a TIR film (35).

This system does not heat the illuminated objects and ensures perfectly uniform lighting, being also suitable for difficult objects. Moreover, it is very economic, both in terms of the system's cost and the operating costs.

## Description

The present invention relates to a lighting system designed for delicate objects, in particular objects of art intended to be exhibited to the general public in museums, churches, exhibitions or similar environments.

The lighting, of objects of art is subject to very special requirements, frequently difficult to satisfy.

First of all, particularly in the case of many antique objects of art, it is essential to ensure that the lighting does not damage the objects; in fact, infrared radiations normally emitted with visible radiations cause the object to be heated, which in certain cases may be dangerous.

Furthermore, it is very important for the lighting to illuminate the object correctly. Otherwise, the opportunity for the general public to appreciate the object in its every detail would be compromised. It is sometimes particularly difficult to satisfy this requirement, for example with regard to objects such as low reliefs or high reliefs in shining metal, which may generate intense reflections that obstruct the view.

Finally, the economic aspect cannot be ignored, especially in a country so rich in objects of art such as Italy. A lighting system must have a limited cost, both in reference to the purchase cost and above all to the operating cost.

At present there are no known specific lighting systems for this type of application. Normally, therefore various forms of lighting systems are adapted: ceiling fittings, spotlights, fluorescent lamps. However, lighting is found to be inadequate in many cases, sometimes even harmful as regards the integrity of the objects.

The present invention seeks to make available a specific lighting system for delicate objects, such as objects of art, intended to be exhibited to the general public.

This aim is achieved, according to a first aspect of the present invention, by a lighting system designed for delicate objects, in particular objects of parts, intended to be exhibited to the general public, which incorporates an optical lightguide tubular lamp structure and a light source combined with the lamp structure characterised in that the lamp structure embodies two rigid half-shells, elongated in a longitudinal direction and arched in a transversal direction, mutually combined in a longitudinal direction so each half-shell presents an internal surface facing the internal part of the lamp structure and an external surface facing the outside of the lamp structure, at least one of the half-shells being made from transparent material, at least one of the half-shells having an internal surface lined with a TIR film.

The optical lightguide lamps are known in the prior art and foresee that the light generated by one or more light sources is directed inside a tubular structure having surfaces that are at least partially transparent and at least partially reflective on the inner surface. The luminous rays of light are propagated in the tubular structure by a series of successive reflections and exit therefrom in a more or less gradual manner. The optical lightguides achieved by utilising total internal reflection films (or TIR films, an acronym of Total Internal Reflection) are especially effective.

These TIR films on known in the prior art for example by the European patent No. EP 0 225 123, to which reference should be made for a detailed description of their characteristics; one example of such TIR films are those manufactured and marketed by the Minnesota Mining and Manufacturing Company under the brand name of OLF - Optical Lighting Film. These films are in the form of flexible sheets or tapes presenting a surface with a succession of parallel micro-reliefs of an essentially triangular cross-section; these films may be applied on the internal surfaces of transparent tubes, with the micro-reliefs facing outwards and directed in an axial sense in relation to the lamp, thereby generating an efficient optical lightguide. In fact the incident light, thanks to the optical characteristics of the aforesaid films, is reflected at angles of incidence, which are less than a limiting value, whereas the incident light is allowed to pass outside the lamp when the angles of incidence are greater. Special elements defined as extractors are inserted in the tube to produce a controlled distribution of a portion of the light which travels inside the lamp thereby causing a part of the luminous waves to be deviated and incident to the TIR film at angles that cause the light to exit the lamp.

The abovementioned system is particularly suitable for the lighting of works of art. In fact, the system does not transmit significant quantities of infrared light onto the illuminated object thanks to the structure of the optical lightguide lamp utilising the TIR film that is intrinsically capable of transporting visible light in a very efficient manner, much less infrared radiation. The system is hence found to be essentially cold, or rather the relative heating is concentrated in the light source which may be remote and readily shielded; an infrared filter may be provided.

Moreover, the quality of the lighting achieved is very high, the optical lightguide lamp structure utilising TIR film is capable of providing a very well distributed band of light over all the required surface of the structure itself The lighting achieved is hence found ideal to highlight all the details, also those of very difficult objects such as high reliefs in shining metal.

Finally, the abovementioned lighting system is extremely economic. In fact, the high transmission efficiency of the band of light, combined with the uniform distribution means a relatively moderate lighting energy output from the light source is sufficient, much lower than the energy consumption with conventional lighting systems. Even the initial cost is not particularly high and can therefore be readily amortised over a short period of time. In fact, the combined half-shell structure makes application of the TIR film simple and therefore economic (much easier compared to the application inside a lamp); furthermore, storage and transport of the lamp structures may be made easier if final assembly of the half-shells (and hence the formation of a relatively bulky structure) is left to the installation phase.

The half-shells may be of various types and number, and the techniques adopted to combine them may take various forms; in any event it is preferable to ensure that the lamp structure has a given overall rigidity. In an embodiment preferred for its simplicity there are two half-shells and these are combined with each other by two rigid longitudinal profiles, two extruded metal profiles, for example.

The optical lightguide lamp structure enables a highly controlled emission of light to be achieved, evidently directed towards the object to be illuminated, without there being significant dispersion in the direction of the observer. Advantageously the system may, as an option, include an opaque shielding fin, extending longitudinally along the lamp structure and fixed to one of the longitudinal profiles. This fin is useful to further shield the light emitted by the lamp structure, preventing even a minimum fraction thereof from being, propagated towards the observer instead of the object, thereby interfering with the observation of the said object.

The shielding fin has preferably an opening fitted with means to house an indicator panel, at least partially transparent. In this way the light shielded by the fin is usefully exploited to provide the observer with various types of information, for example and only by way of illustration, information regarding,, the illuminated object.

The system may have different configurations depending on the characteristics of the rooms and the object to be illuminated.

For example, in the relatively common circumstances in which it is appropriate to keep observers at a certain distance from the object (for safety reasons regarding the object or even simply to avoid crowding by persons who obstruct one another and hence to made viewing more orderly) the system may advantageously be configured to embody at least one upright and a crosspiece; the upright stands on or is fixed to the ground and the crosspiece is fixed to the upright to assume a horizontal position in front of the object to be illuminated thus forming a barrier; the crosspiece incorporates the lamp structure and the upright includes the light source. The lamp structure itself therefore becomes a barrier to keep observers at a distance. It may be noted that the light source incorporated in the upright not only contributes to avoid the undesired heating of the object, but also ensures the barrier formed by the lamp structure is not heated and hence does not represent a potential hazard for observers. Naturally, there may be one or two uprights depending on the size and the position of the crosspiece: a hook in a wall or other fixed structure may replace one of the uprights. Should there be two uprights, a light source may be foreseen in each upright or only in one of the said uprights.

The crosspiece may include both the lamp structure and the light source as a variation.

In the event overhead lighting is preferred the system may advantageously be configured to incorporate at least one beam and means of suspension; the means of suspension are fixed to the ceiling and the beam is fixed to the means of suspension to be arranged horizontally in front of the object to be illuminated; the beam includes the lamp structure and the light source.

Again, in the event whereby the lighting instead is preferred in a vertical arrangement, the system may advantageously be configured to include a vertical column resting on or fixed to the ground, positioned in front of the object to be illuminated; the column incorporates the lamp structure and the light source.

The lamp structure used in the above described system can be advantageously employed also in other cases. Therefore, in a second aspect, the present invention relates to a lightguide lamp structure, comprising at least two rigid half-shells, extended in a longitudinal direction and arched in a transversal direction, mutually connected longitudinally so that each of said half-shell presents an internal surface facing the internal part of the lamp structure and an external surface facing the external part, at least one of the half-shells being made of transparent material, at least one of the half-shells having an internal surface lined with a TIR film.

Preferably, there are provided two half-shells, mutually connected by two rigid longitudinal profiles, and a light extractor longitudinally arranged within the half-shells.

Further features and advantages of a system according to the invention will become more apparent from the following description of a number of preferred embodiments, taken in connection with the attached drawings. In the drawings:
- figure 1 is a perspective view of a system according to the invention, in a first configuration;
- figure 2 is a perspective view of a system according to the invention, in a second configuration;
- figure is a perspective view of a system according to the invention, in a third configurations;
- figure 4 is a perspective view, partially in cross-section, of a detail of the system of figure 1, represented in an enlarged scale.

In the figures, A indicates an object to be illuminated; the said object is schematically represented as a picture hung on a wail M, but could be any other delicate object intended to be exhibited to the general public, such as a piece of sculpture, a low relief, a high relief, a fresco, an inscription, etc. either hung on a wall or positioned in any other manner.

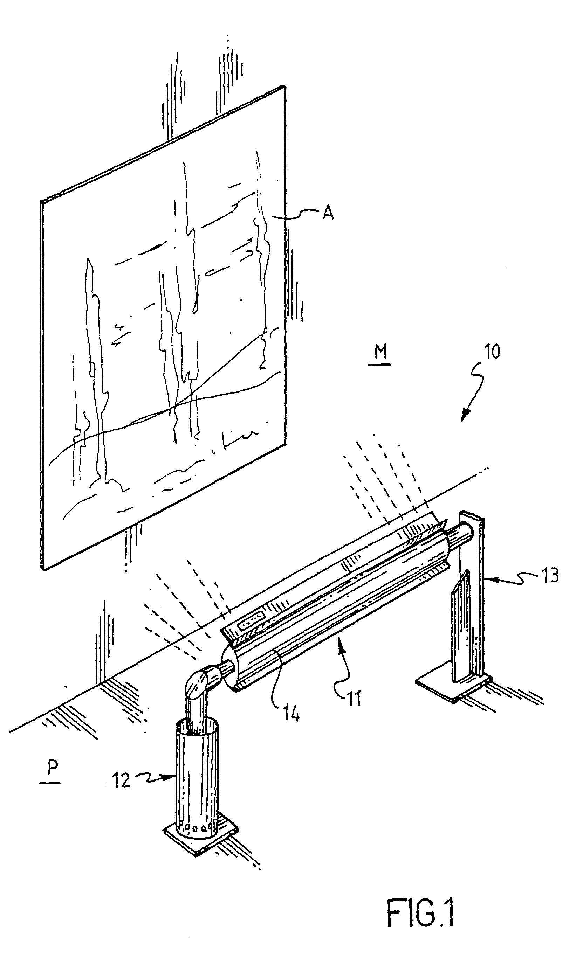

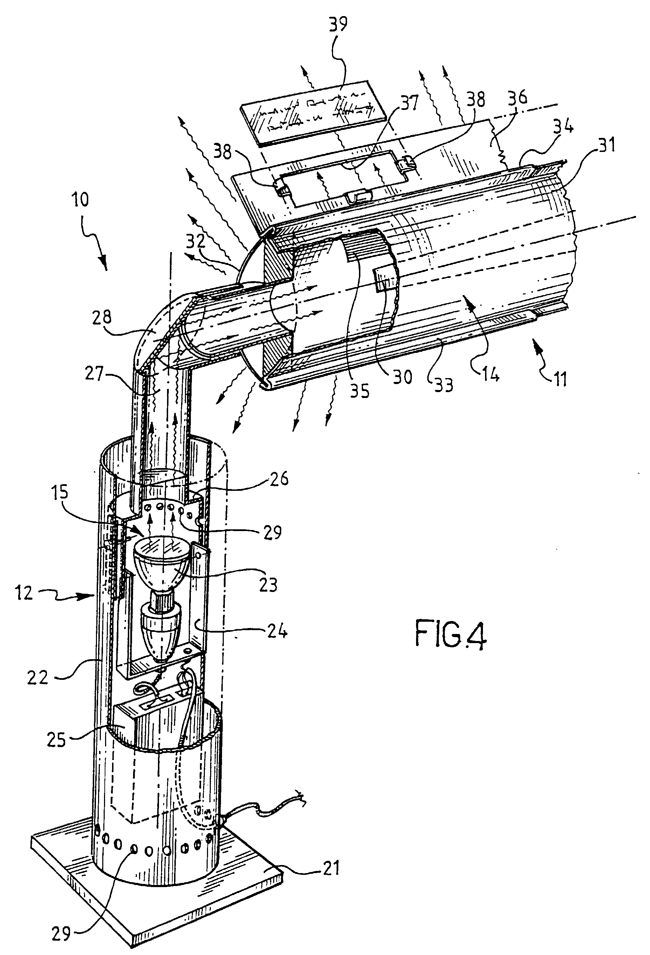

Figures 1 and 4 illustrate a lighting system 10, which includes a crosspiece 11, supported by two uprights 12 and 13. The crosspiece 11 incorporates a tight tube lamp structure 14. The upright 12 includes a light source 15, optically connected to the lamp structure 14. The upright 13 is a simple mechanical support.

More in particular, the upright 12 includes a base 21 surmounted by a hollow cylindrical body 22. A projector 23 is fixed inside the body 22, via a supporting bracket 24, for example and preferably, a high efficiency projector. A unit to supply power and control the projector 23 is also mounted inside the body 22, beneath the projector 23 itself.

A collector 26 is mounted in front of the projector 23, facing an optical tubular duct 27 angled at 90° by means of a mirror 28. Alternatively, the 90° angular arrangement could be achieved utilising an optical prismatic system. Aeration holes 29 are also foreseen in the upright 12, for example, made both in the lower part of the body 22 and in the collector 26. The optical duct 27 is connected to the lamp structure 14 of the crosspiece 11 on the opposite side in relation to the collector 26.

The lamp structure 14 includes two half-shells 31 and 32 made from rigid material, such as polycarbonate or similar material, mechanically mutually connected in a longitudinal sense by two longitudinal, rigid profiles 33 and 34. The two half-shells 31 and 32 are arched in a transversal direction, following an arc having an amplitude significantly less than 180°, so that the assembly formed thereby has an essentially lenticular cross-section.

The shape of the two half-shells 1 and 32 is represented in the figures as being essentially equal and therefore the lenticular cross-section appears to be symmetrical; however, the shape of the two half-shells 31 and 32 could also differ, with a resultant asymmetric shape of the lenticular cross-section.

The half-shell 31 is opaque, thus light is unable to pass, whereas the half-shell 32 is transparent, hence light is able to pass. Advantageously, both half-shells 31 and 32 are made from transparent polycarbonate, lined with an opaque film in the case of the half-shell 31 for example, applied metal foil (not shown in the figures).

Should the two half-shells 31 and 32 have the same shape, they will evidently be combined so that they present a concave internal surface facing the inside of the lamp structure 14 and a convex external surface facing the outside, whereas if they are shaped differently, it cannot be ruled out that one of the two half-shells (particularly the opaque half-shell 32) may be arranged so as to present a convex internal surface facing the inside of the lamp structure 14 and a concave external surface facing the outside.

At least one of the half-shells 31 and 32 (but preferably both) are internally lined with a TIR film 35, for example the OLE film manufactured by the Minnesota Mining and Manufacturing Company. The TIR film 35, compared to the lamp structure 14, is arranged with its micro-reliefs (highlighted simply by parallel lines in figure 4) facing in a longitudinal direction, facing the outside of the structure itself 14, namely towards the inside concave walls of the half-shells 31 and 32.

A light extractor 30 is arranged longitudinally inside the two connected half-shells 31 and 32, the said light extractor has the shape of a strip of optical propagating material with a variable transverse cross-section positioned on the TIR film 35 applied to the opaque half-shell 31.

The profile 33 has an essentially narrow "C"-shaped cross-section and encloses the folded and overlapped edges of the half-shells 31 and 32, fixing the said edges. The profile 34 incorporates a part corresponding to the profile 33 and extends into a shielding fin 36, extended longitudinally along the lamp structure 14 and transversally towards the outside in relation to the lamp structure 14.

The fin 36 includes an opening 37 around which tabs 38 are embodied, folded to form a means to house an indicator panel 39, at least partially transparent; for example, the panel 39 may display text relating to the object A using transparent characters and signs on an opaque background, or vice versa.

The lighting system 10, as shown in figure 1, may advantageously be positioned with the uprights 12 and 13 resting on or fixed to the floor P and with the crosspiece arranged horizontally in front of object A to form a barrier for object A itself. This arrangement enables object A to be illuminated efficiently and at the same time to keep the viewing public at a distance.

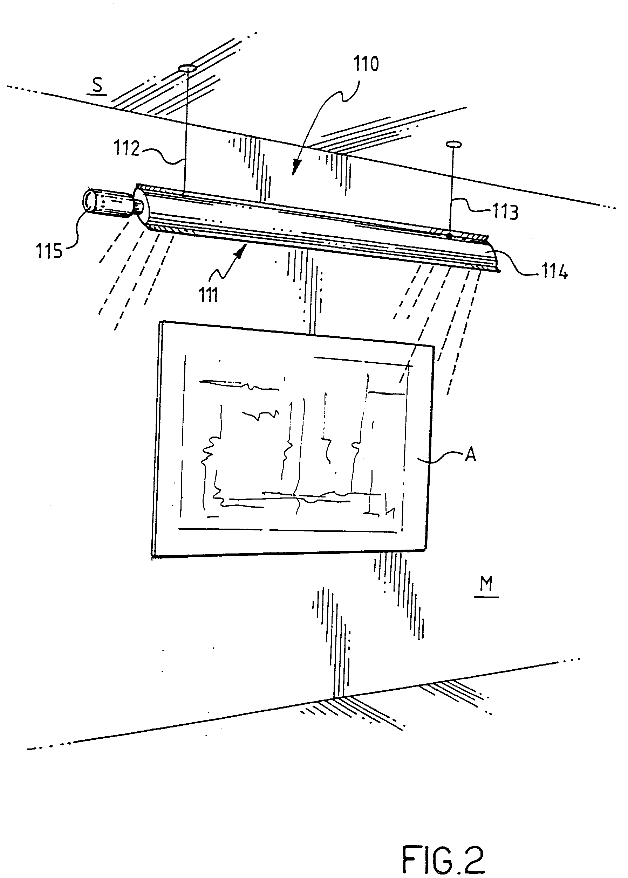

Figure 2 illustrates a lighting system 110, which incorporates the crosspiece 111, hanging from the ceiling S from two wires 112 and 113. The crosspiece 111 includes a light tube lamp structure 114 and a light source 115 aligned and connected to the lamp structure 114.

The lamp structure 114 and the light source 115 are analogous to the lamp structure 14 and light source 15 of system 10 and will not be described in detail. It may be noted that the lamp structure 114 is illustrated in figure 2 without a shielding fin, but if required may be equipped with a shielding fin analogous to fin 36.

The lighting system 110 may be advantageously hung in front of object A, illuminating the said object in an efficient manner.

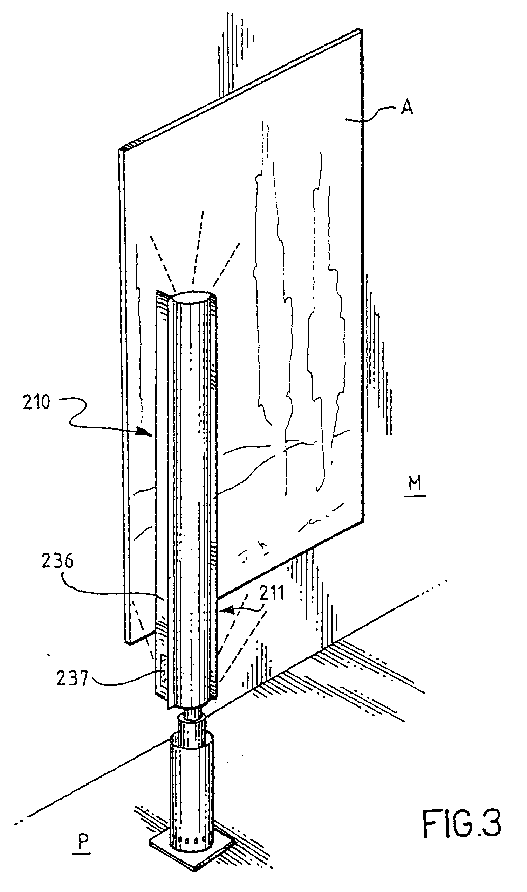

Figure 3, illustrates a lighting system 210, which incorporates a vertical column 211, which includes a tube tight lamp structure 214 and a tight source 215, aligned and connected to the lamp structure 214.

The lamp structure 214 and the light source 215 are analogous to the lamp structure 14 and light source 15 of system 10 and will not be described in detail. It may be noted that the lamp structure 214 is illustrated in figure with a shielding fin 236 and relative opening 237 analogous to the fin 36 and opening 37, but may be embodied without the said fin and/or the said opening.

The lighting system 210 may advantageously be arranged with the column 211 resting on or fixed to the floor P, in front of the object A, thereby illuminating the said object in an efficient manner.

## Claims

1. A lighting system for delicate objects, in particular objects of art, intended to be exhibited to the general public incorporating an optical lightguide lamp structure and a light source connected to the lamp structure characterised in that the lamp structure includes two rigid half-shells, extended in a longitudinal direction and arched in a transversal direction, mutually connected longitudinally so that each half-shell presents an internal surface facing the internal part of the lamp structure and an external surface facing the external part, at least one of the half-shells being made of transparent material, at least one of the half-shells having an internal surface lined with a TIR film.

2. A system according to claim 1 wherein there are two half-shells and they are mutually connected by two rigid longitudinal profiles.

3. A system according to claim 2, incorporating an opaque shielding fin, extended longitudinally along the lamp structure and fixed to one of the longitudinal profiles.

4. A system according to claim 3, wherein the shielding fin incorporates a means to house an indicator panel, at least partially transparent.

5. A system according to any of the previous claims, incorporating at least one upright and a crosspiece wherein the upright rests on or is fixed to the ground and the crosspiece is fixed to the upright to assume a horizontal position facing the object to be illuminated thereby forming a barrier, wherein the crosspiece includes the said lamp structure and the upright includes the said light source.

6. A system according to any of the claims from 1 to 4, incorporating an upright and a crosspiece wherein the upright rests on or is fixed to the ground and the crosspiece is fixed to the upright to assume a horizontal position facing the object to be illuminated thereby forming a barrier, wherein the crosspiece includes the said lamp structure and the said light source.

7. A system according to any of the claims from 1 to 4, incorporating at least one beam and means of suspension, wherein the means of suspension are fixed to the ceiling and the beam is fixed to the means of suspension to assume a horizontal position facing the object to be illuminated, wherein the beam includes the said lamp structure and said light source.

8. A system according to any of the claims from 1 to 4, incorporating a vertical column resting on or fixed to the ground in front of the object to be illuminated, wherein the column includes the said lamp structure and the said light source.

9. A lightguide lamp structure, comprising at least two rigid half-shells, extended in a longitudinal direction and arched in a transversal direction, mutually connected longitudinally so that each of said half-shell presents an internal surface facing the internal part of the lamp structure and an external surface facing the external part, at least one of the half-shells being made of transparent material, at least one of the half-shells having an internal surface lined with a TIR film.

10. A lamp structure according to claim 9, wherein there are two half-shells and they are mutually connected by two rigid longitudinal profiles.

11. A lamp structure according to claim 9 or 10, comprising a light extractor longitudinally arranged within the half-shells.
